(19) Europäisches Patentamt
European Patent Office
Office européen des brevets

(11) EP 3 414 024 B1

(12) FASCICULE DE BREVET EUROPEEN

(45) Date de publication et mention de la délivrance du brevet:
**10.11.2021 Bulletin 2021/45**

(21) Numéro de dépôt: **17709913.2**

(22) Date de dépôt: **08.02.2017**

(51) Int Cl.:
***C22B 60/02*** *(2006.01)* ***G21F 9/12*** *(2006.01)*
***B09B 3/00*** *(2006.01)* ***B09C 1/02*** *(2006.01)*
***C22B 7/00*** *(2006.01)*

(86) Numéro de dépôt international:
**PCT/EP2017/052740**

(87) Numéro de publication internationale:
**WO 2017/137432 (17.08.2017 Gazette 2017/33)**

# (54) PROCÉDÉ DE DISSOLUTION SÉLECTIVE UTILISANT UN AGENT TENSIOACTIF NON-IONIQUE

VERFAHREN ZUR SELEKTIVEN AUFLÖSUNG UNTER VERWENDUNG EINES NICHTIONISCHEN TENSIDS

METHOD FOR SELECTIVE DISSOLUTION USING A NON-IONIC SURFACTANT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.02.2016 FR 1651058**

(43) Date de publication de la demande:
**19.12.2018 Bulletin 2018/51**

(73) Titulaires:
- **Commissariat à l'énergie atomique et aux énergies alternatives 75015 Paris (FR)**
- **Orano Cycle 92400 Courbevoie (FR)**

(72) Inventeurs:
- **MAGNALDO, Alastair 30330 Connaux (FR)**
- **MARC, Philippe 42340 Veauche (FR)**
- **OLIVIER, Pierre 44470 Carquefou (FR)**

(74) Mandataire: **Brevalex**
**56, Boulevard de l'Embouchure**
**B.P. 27519**
**31075 Toulouse Cedex 2 (FR)**

(56) Documents cités:
**EP-A1- 1 148 571**
**EP-A1- 2 653 573**
**US-A- 4 045 084**
**US-A1- 2008 025 890**
**US-A1- 2008 196 546**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 414 024 B1

## Description

### DOMAINE TECHNIQUE

La présente invention appartient au domaine général de la dissolution des solides et notamment au domaine de la dissolution sélective des solides typiquement mise en œuvre dans le cadre du recyclage des matières et déchets et, dans le domaine du recyclage des matières nucléaires, plus particulièrement le recyclage des combustibles nucléaires usés.

En effet, la présente invention propose un procédé pour augmenter, accélérer et favoriser la dissolution d'un composé générant un gaz lors de sa mise en contact avec une solution de dissolution et ce, vis-à-vis de la dissolution d'un autre composé qui ne génère aucun gaz lorsque mis en contact avec cette même solution de dissolution. Le procédé selon l'invention est fondé sur la présence d'au moins un agent tensioactif non ionique dans cette solution de dissolution.

### ÉTAT DE LA TECHNIQUE ANTÉRIEURE

De nombreux procédés de recyclage mettent en œuvre une étape initiale durant laquelle des composés se présentant sous forme solide sont soumis à une attaque chimique provoquant de fait leur dissolution. Les étapes réalisées suite à cette dissolution peuvent consister en une extraction, telle qu'une extraction liquide-liquide, utilisant des extractants adaptés au(x) composé(s) à récupérer.

A titre d'exemples de tels procédés de recyclage, on peut citer le recyclage du cuivre à partir d'un mélange broyé d'acier-cuivre par dissolution du cuivre en milieu nitrique ($HNO_3$) ou encore le recyclage de l'uranium via la dissolution du dioxyde d'uranium ($UO_2$) également en milieu nitrique et ce, en tête du procédé de recyclage des combustibles nucléaires usagés.

Pour rappel, la réaction de dissolution de l'uranium (Équations 1) transforme le dioxyde d'uranium ($UO_2$, le solide) en nitrate d'uranyle ($UO_2(NO_3)_2$, le soluté), entraînant l'oxydation de l'uranium du degré +IV au degré +VI par l'acide nitrique. Par conséquent, la production du nitrate d'uranyle s'accompagne de celle de produits issus de la réduction de l'acide nitrique, majoritairement constitués de monoxyde d'azote (NO) et de dioxyde d'azote ($NO_2$). Ces deux espèces chimiques se trouvent à l'état gazeux dans les conditions standards de pression et de température et, par extension, dans les conditions de réalisation de l'étape de dissolution. Ils présentent par ailleurs une très faible solubilité dans le milieu de dissolution.

$$\alpha\, UO_2 + \beta\, HNO_3 \rightarrow \alpha\, UO_2(NO_3)_2 + \gamma\, NO + \delta\, NO_2 + \varepsilon\, H_2O$$

$$NO_2, NO_{dissous} \rightarrow NO_2, NO_{gaz} \qquad \text{Equations 1}$$

Ces étapes préliminaires de dissolution font ainsi l'objet de recherches sur les mécanismes sous-jacents. En effet, les composés d'intérêt comme le cuivre ou l'uranium peuvent se présenter, préalablement au processus de recyclage, en mélange avec d'autres composés de plus faible intérêt notamment en termes de valorisation. Pour cette raison, il est intéressant de favoriser des étapes d'attaque chimique durant lesquelles la dissolution des composés d'intérêt est favorisée vis-à-vis de la dissolution des autres composés également présents dans les produits et déchets à recycler.

A noter cependant que, dans le cadre des recherches effectuées sur les étapes de dissolution, la nucléation de bulles sur des surfaces solides mue par une force chimique, ce qui est le cas lors d'une dissolution, a été peu étudiée. Quand elle a fait l'objet d'études, une possible action sur celle-ci par des polluants de la solution a été proposée **[1]**. En effet, dans ce travail, il a été considéré que la présence de cristaux de carbonate de calcium sur les bouteilles pourrait expliquer l'expulsion d'une partie de la boisson entraînée par la mousse i.e. le gerbage des boissons gazeuses. D'autres études, portant sur la nucléation de gaz sans apport d'agents extérieurs montrent que le gaz pourrait lui-même être son propre agent de surface **[2]**.

Par contre, l'utilisation d'un agent tensioactif est bien documentée dans le domaine des transferts de chaleur et de l'ébullition de vapeur d'eau sur des surfaces chaudes. Ce domaine technique n'est, cependant, en rien comparable à celui de la présente invention qui concerne la dissolution des solides et donc le transfert et le transport de matière.

De même, des expériences classiques d'électrolyse de l'eau qui consiste en une réaction produisant des gaz sur un support solide en milieu aqueux se font par ajout d'un tensioactif cationique qu'est le bromure d'hexadécyltriméthylammonium sans réellement connaître la physique de l'influence de ce dernier **[3].** De plus et principalement, les réactions étudiées à savoir la réaction de dégagement d'hydrogène (HER pour « Hydrogen Evolution Reaction ») et la réaction de dégagement d'oxygène (OER pour « Oxygen Evolution Reaction ») ne constituent pas des réactions de dissolution.

Taha décrit le rôle d'agents tensioactifs non ionique (Triton X-100®) ou cationique (bromure de cétyltriméthylammonium) sur le transfert de masse lors de réactions électrochimiques **[4].** Ces réactions sont des réactions électrochimiques sur une surface solide avec production de gaz et se distinguent donc clairement d'une réaction de dissolution.

Plusieurs brevets ou demandes de brevet font référence à l'apport d'agents contrôlant la dissolution **[5]** ou **[6]**. Ainsi, dans la demande internationale WO 2008/130592 **[5]**, un tel agent peut être un agent tensioactif tel qu'un agent tensioactif non ionique utilisé pour contrôler la dissolution d'un composé réactionnel. En particulier, lorsque ce composé se trouve sous forme de particules, le tensioactif facilite la dispersion de ces dernières dans la solution réactive. Ainsi, le but recherché dans la demande internationale WO 2008/130592 **[5]** est la production de gaz par la dispersion du solide à dissoudre, ceci afin d'augmenter la surface d'attaque, ou la dispersion de solides autres pour promouvoir la nucléation de gaz ailleurs que sur les solides à dissoudre. La demande de brevet GB 2 264 112 **[6]** propose une composition comprenant un matériel à base de lithium ou de calcium se présentant sous forme de particules compactées, ladite composition étant apte à réagir avec de l'eau pour générer de l'hydrogène. Dans cette composition, on peut également trouver un agent tensioactif et notamment un agent tensioactif anionique comme le dodécylsulfate de sodium ou le dodécylbenzènesulfonate sodique. Un tel agent tensioactif est utilisé pour modifier la taille et la densité des bulles d'hydrogène. EP 2 653 573 concerne un procédé pour récupérer des métaux de valeur à partir de piles au lithium comprenant dissolution dans une solution alkaline, où au moins un composé solide est dissous en générant un composé gazeux et en ajoutant une solution de surfactant contenant un agent tensioactif non ionique.

Du fait de l'intérêt grandissant quant à la récupération des composés d'intérêt dans le cadre d'un recyclage, les inventeurs se sont donc fixé pour but de proposer un procédé permettant de faciliter ou encore d'accélérer la dissolution de composés d'intérêt et ce, notamment dans le cadre de l'attaque chimique des déchets et produits comprenant de tels composés d'intérêt.

**EXPOSÉ DE L'INVENTION**

Ce but et d'autres encore sont atteints par la présente invention qui propose un procédé pour accélérer la dissolution de composés d'intérêt solides comme l'uranium ou le cuivre et ainsi favoriser leur dissolution vis-à-vis de celle d'autres composés solides moins intéressants, par utilisation d'un additif particulier à savoir un agent tensioactif non ionique.

En effet, alors que, selon l'état de la technique, la formation de bulles de gaz dans les procédés impliquant une dissolution est la seule conséquence de cette dernière, les inventeurs ont montré, par leurs travaux expérimentaux et des calculs numériques, que la formation de bulles de gaz est aussi une condition nécessaire à la dissolution et, plus particulièrement, que les cinétiques de dissolution sont régies, de manière importante, par le dégazage des espèces gazeuses.

Sans vouloir être limité à une quelconque théorie et sur la base du cas de la dissolution de l'$UO_2$ en milieu nitrique, les inventeurs ont montré que cette dernière s'accompagne d'une réaction catalysée et donc nécessite la présence d'un catalyseur sous la forme d'une espèce chimique près de la surface à dissoudre. Cette espèce catalytique est aussi un produit de la réaction de dissolution. Afin que la réaction catalytique puisse être prédominante, il est nécessaire qu'elle soit accumulée dans des failles de dissolution ; la couche limite de diffusion qui s'établit naturellement entre la surface en train de se dissoudre et la solution ne suffit pas à accumuler le catalyseur. Cependant, sans renouvellement de solution dans ces failles, l'acide qui est également nécessaire à toute réaction, est rapidement consommé et la réaction s'étouffe d'elle-même. Lorsque les conditions géométriques de la faille sont suffisantes, une bulle de gaz composée de produits de la réaction peut être produite. Sa nucléation, croissance et dégazage permettent ainsi le renouvellement des solutions dans la faille pour initier un nouveau cycle de dissolution.

La démonstration expérimentale de ce processus a conduit les inventeurs à proposer une méthode pour cibler très spécifiquement les bulles de gaz et promouvoir leur croissance ultérieure avec, comme conséquence directe, une accélération de la cinétique de dissolution. Plus particulièrement, les inventeurs ont cherché à influer sur la réaction de dissolution qui produit des gaz en influençant la croissance des bulles de gaz, notamment en changeant les tensions de surface entre les bulles de gaz, la solution liquide et les solides et ce, sans aucun effet sur les autres réactions de dissolution ne produisant pas de gaz.

Dans ce but, les travaux des inventeurs ont permis de mettre en évidence que les agents tensioactifs non ioniques constituent de bons candidats pour agir sur la dissolution de solides produisant des gaz de dissolution. Un agent tensioactif non ionique s'adsorbe, de façon spécifique, par des interactions hydrophobes, sur les bulles qui présentent les surfaces les plus hydrophobes dans la solution. Dans l'état actuel des connaissances des inventeurs, cette adsorption modifie plus particulièrement les tensions de surface gaz-liquide ou gaz-solide sans exclure une réduction de la tension de surface liquide-solide.

En d'autres termes, lors d'une étape de dissolution, la solution de dissolution (solution A) dissout le premier composé solide i.e. le composé d'intérêt (composé B) dans un mélange comprenant le composé B et au moins un autre composé solide (composé C). La dissolution du composé B dans la solution A produit ou relâche au moins un gaz (gaz G), ce qui n'est pas le cas du composé C. Selon la nature du gaz G notamment sa solubilité dans la solution A, le gaz

G est appelé à nucléer afin de dégazer de la solution A sous la forme de bulles. L'invention consiste à rajouter, à la solution A, un agent tensioactif non ionique (agent H) qui réduit plus particulièrement la tension de surface liquide-gaz, les concentrations limites de nucléation du gaz G dans la solution A sont réduites. L'ajout de l'agent H dans la solution A promeut alors la production de bulles. Les travaux des inventeurs ont montré que cette promotion du bullage se fait par l'augmentation du nombre de sites actifs de dissolution, entraînant une augmentation de la cinétique de dissolution sans aucune conséquence sur le comportement à la dissolution du composé C dans la solution A.

De plus, lorsque le composé B est mis à dissoudre dans une autre solution différente de la solution A selon un mécanisme réactionnel qui n'implique aucune production gazeuse, l'ajout de l'agent H est sans effet particulier. Lorsque le composé C est augmenté en proportion par rapport au composé B dans la solution A, l'effet de l'ajout de l'agent H est préservé. Ainsi, l'effet de l'agent H est spécifique d'une dissolution produisant des bulles de gaz.

Des explications ci-dessus et des résultats expérimentaux ci-après, il est évident que la présente invention ne doit pas se limiter à la dissolution des déchets nucléaires contenant du dioxyde d'uranium mais peut être généralisée à tout procédé de dissolution mettant en œuvre un mélange comprenant des éléments solides dont la dissolution génère ou non des gaz de dissolution.

Par conséquent, la présente invention concerne un procédé de dissolution sélective d'un premier composé solide présent dans un mélange vis-à-vis d'un second composé solide différent dudit premier composé solide également présent dans ledit mélange, ledit procédé comprenant au moins une étape consistant à mettre en contact ledit mélange avec une solution de dissolution dans laquelle ledit premier composé solide est dissous en générant au moins un composé gazeux et dans laquelle ledit second composé solide est dissous sans générer aucun composé gazeux, ladite solution de dissolution comprenant au moins un agent tensioactif non ionique.

Par « dissolution sélective », on entend dans le cadre de la présente invention que la dissolution du premier composé (ou composé B) est favorisée vis-à-vis de celle du second composé (ou composé C).

Aussi, dans des conditions identiques notamment en matière de nature (mêmes composés contenus dans le mélange dans les mêmes quantités) et de quantité de mélange soumis à la dissolution et de nature de la solution de dissolution, la quantité de premier composé dissoute au temps t de mise en contact avec la solution de dissolution en présence d'au moins un agent tensioactif non ionique est supérieure à la quantité dissoute au même temps t en absence dudit agent tensioactif non ionique alors que la quantité de second composé dissoute au temps t de mise en contact est identique ou du moins non significativement différente en présence et en absence dudit agent tensioactif non ionique. Il est évident que le temps t doit être judicieusement choisi afin d'optimiser les quantités relatives dissoutes.

En d'autres termes, dans des conditions identiques notamment telles que précédemment définies, la durée pour obtenir une dissolution totale ou maximale pour le premier composé en présence d'un agent tensioactif non ionique est inférieure à la durée pour obtenir une dissolution totale ou maximale pour ce même composé sans agent tensioactif non ionique, alors que la durée pour obtenir une dissolution totale ou maximale pour le second composé est identique en présence et en absence dudit agent tensioactif non ionique.

En d'autres termes encore, dans des conditions identiques notamment telles que précédemment définies, la vitesse initiale de dissolution pour le premier composé en présence d'un agent tensioactif non ionique est supérieure à la vitesse initiale de dissolution pour ce même composé sans agent tensioactif non ionique, alors que la vitesse initiale de dissolution pour le second composé est identique ou du moins non significativement différente en présence et en absence dudit agent tensioactif non ionique.

L'homme du métier sait déterminer, sans effort inventif, par des techniques classiques dans le domaine de la dissolution telles que celles mises en œuvre dans la partie expérimentale ci-après, la quantité d'un composé dissoute, la durée pour obtenir une dissolution totale ou maximale d'un composé et la vitesse initiale de dissolution d'un composé.

La caractéristique essentielle de la présente invention réside dans l'utilisation d'au moins un agent tensioactif non ionique. Ainsi, il peut être utilisé soit un seul agent tensioactif non ionique, soit un mélange d'au moins deux agents tensioactifs non ioniques différents. Lorsqu'un mélange de plusieurs agents tensioactifs non ioniques différents est utilisé, ce mélange peut typiquement contenir deux, trois, quatre ou cinq agents tensioactifs non ioniques différents.

Par « agent tensioactif », on entend une molécule organique comportant au moins une partie lipophile (apolaire) et au moins une partie hydrophile (polaire).

Par « agent tensioactif non ionique », on entend un composé dont les propriétés tensioactives, notamment l'hydrophilie, sont apportées par des groupements fonctionnels non chargés tels qu'un alcool, un éther, un ester ou encore un amide, contenant des hétéroatomes tels que l'azote ou l'oxygène. En raison de la faible contribution hydrophile de ces fonctions, les agents tensioactifs non-ioniques sont le plus souvent polyfonctionnels. Dans le cadre de la présente invention, les agents tensioactifs non-ioniques sont notamment choisis parmi les alcoxylates d'alkyles ; les alcoxylates d'alcools gras ; les alcoxylates d'amines grasses ; les alcoxylates d'acides gras ; les alcoxylates d'oxoalcools ; les alcoxylates d'alkylphénols ; les éthoxylates d'alkyles; les éthoxylates d'alcools gras ; les éthoxylates d'amines grasses ; les éthoxylates d'acides gras ; les éthoxylates d'oxoalcools ; les éthoxylates d'alkylphénols comme, par exemple, les éthoxylates d'octylphénol et de nonylphénol ; les alcools, les $\alpha$-diols, les alkylphénols polyéthoxylés et poly-propoxylés ayant une chaîne grasse comportant, par exemple, de 8 à 18 atomes de carbone, le nombre de groupes oxydes d'éthylène

ou oxydes de propylène pouvant être notamment de 2 à 50 ; les polymères complexes d'oxydes de polyéthylène et de polypropylène ; les copolymères d'oxyde d'éthylène et de propylène ; les copolymères blocs d'oxydes de polyéthylène et de polypropylène comme, par exemple, les copolymères triblocs POE-POP-POE ; les condensats d'oxyde d'éthylène et de propylène sur des alcools gras; les amides gras polyéthoxylés ayant, de préférence, de 2 à 30 moles d'oxyde d'éthylène ; les éthers polyéthoxylés ayant, de préférence, de 2 à 30 moles d'oxyde d'éthylène ; les monoesters (monolaurate, monomyristate, monostéarate, monopalmitate, monooléate, etc) et polyesters d'acides gras et du glycérol ; les amides gras polyglycérolés comportant en moyenne de 1 à 5 et, plus spécialement, de 1,5 à 4 groupes glycérol ; les esters d'acide gras du sorbitan oxyéthylénés comportant de 2 à 30 moles d'oxyde d'éthylène ; les monoesters (monolaurate, monomyristate, monostéarate, monopalmitate, monooléate, etc) et polyesters d'acides gras et du sorbitane, les monoesters de polyoxyéthylène sorbitane ; les esters d'acides gras du sucrose ; les esters d'acides gras du polyéthylèneglycol ; les alkylpolyglucosides et les alkylpolyétherglucosides ; les dérivés de N-alkyl glucamine et les oxydes d'amines tels que les oxydes d'alkyl(C10-C14) amines ou les oxydes de N-acylaminopropylmorpholine ; les polyols (tensioactifs dérivés de sucres) en particulier les alkylates de glucose tels que par exemple l'hexanate de glucose ; les tensioactifs dérivant de glucoside (laurate de sorbitol) ou de polyols tels que les éthers d'alcools glycérolés ; les alcanolamides et leurs mélanges.

Il convient de noter que les processus à l'origine de l'accélération de la dissolution sont d'origine physico-chimiques ce qui permet d'étendre judicieusement l'invention à un large ensemble d'agents tensioactifs. Ainsi les agents tensioactifs non ioniques utilisables dans le cadre de la présente invention ne sont pas limités à un quelconque groupe d'agents tensioactifs non ioniques notamment choisi parmi les agents tensioactifs non ioniques moussants, les agents tensioactifs non ioniques mouillants, les agents tensioactifs non ioniques émulsifiants, les agents tensioactifs non ioniques détergents et les agents tensioactifs non ioniques de solubilisation. Ainsi, le ou les agent(s) tensioactif(s) non ionique(s) utilisable(s) dans le cadre de la présente invention peu(ven)t présenter un quelconque équilibre hydrophile/lipophile (ou HLB pour « Hydrophilic-Lipophilic Balance »), comme illustré dans la partie expérimentale ci-après.

Avantageusement, le ou les agent(s) tensioactif(s) non-ionique(s) utilisable(s) dans le cadre de la présente invention est/sont choisi(s) dans la famille des alkylpolyglucosides ou des alkylpolyétherglucosides, dérivés naturels du glucose et biodégradables, dans la famille des éthers polyéthoxylés ou dans la famille des copolymères blocs d'oxydes de polyéthylène et de polypropylène comme, par exemple, les copolymères triblocs POE-POP-POE ou les copolymères triblocs POP-POE-POP avec POE =$-CH_2-CH_2-O-$ et POP = $-CH_2-C(CH_3)H-O-$. Ce sont, par exemple, l'« ORAMIX CG-110 » de la société SEPPIC, le « Glucopon 215 CS » de la société COGNIS, les agents tensioactifs connus sous le nom commercial Pluronic® de la société BASF, comme, par exemple, le Pluronic® P123, le Pluronic® L35, le Pluronic® L31, le Pluronic® L64, le Pluronic® 31R1, le Pluronic® F108 et le Pluronic® F127 et le P8020 - Simulsol 98 de la société SEPPIC.

Le ou les agent(s) tensioactif(s) non-ionique(s) sont utilisé(s) dans le cadre de la présente invention en une quantité totale comprise entre 0,1 et 50 g par litre de solution de dissolution, notamment comprise entre 0,2 et 40 g par litre de solution de dissolution et, en particulier, entre 0,25 et 30 g par litre de solution de dissolution.

La solution de dissolution mise en œuvre dans le cadre de la présente invention est une solution adaptée pour réduire ou oxyder et faire passer en solution au moins deux composés différents présents dans le mélange mis en contact avec cette dernière, la dissolution d'un seul de ces deux composés entraînant un dégagement gazeux. L'invention peut se limiter à ajouter un tensioactif non ionique à une réaction connue pour accélérer la dissolution. Dans le cas de mélanges, l'homme du métier saura choisir, sur la base de ses connaissances et sans effort inventif, la solution de dissolution et les temps de dissolution les mieux adaptés en fonction du mélange soumis à une dissolution et de la nature du ou des composé(s) dont on souhaite favoriser la dissolution aux dépens de celle d'un ou de plusieurs autre(s) composé(s).

Ainsi, la solution de dissolution susceptible d'être mise en œuvre dans le cadre de la présente invention peut être une solution aqueuse acide voire fortement acide ou une solution aqueuse alcaline voire fortement alcaline.

Par « fortement acide », on entend une solution de dissolution aqueuse dont le pH est inférieur ou égal à 5, notamment inférieur à 4 et, en particulier, inférieur à 3. Une solution de dissolution acide comprend un ou plusieurs acides minéraux. A titre d'exemples, une solution de dissolution aqueuse acide est notamment choisie parmi les solutions aqueuses d'acide chlorhydrique (HCl), d'acide nitrique ($HNO_3$), d'acide fluorhydrique (HF), d'acide sulfurique ($H_2SO_4$), d'acide phosphorique ($H_3PO_4$), et leurs mélanges. Les acides ou leurs mélanges utilisés dans la solution de dissolution acide voire fortement acide peuvent se présenter sous forme d'acides concentrés. En variante, une solution de dissolution acide peut être une solution dont l'acidité est apportée par les composés à dissoudre.

De plus, à titre d'exemples particuliers de mélanges de dissolution acides, on peut citer (i) un mélange de $HNO_3$ éventuellement concentré et de HF ou (ii) un mélange de $HNO_3$ éventuellement concentré et de HCl, les proportions étant quelconque dans ces différents mélanges.

Par « fortement alcaline », on entend une solution aqueuse dont le pH est supérieur à 9, notamment supérieur à 10 et, en particulier, supérieur à 11. L'expression « fortement alcaline » est équivalente à et interchangeable avec l'expression « fortement basique ». Une solution de dissolution aqueuse alcaline comprend une ou plusieurs bases

minérales. A titre d'exemples, une solution de dissolution aqueuse alcaline est notamment choisie parmi les solutions aqueuses d'hydroxyde de sodium (NaOH), d'hydroxyde de potassium (KOH), d'hydroxyde de calcium ($Ca(OH)_2$), d'hydroxyde de lithium (LiOH), d'hydroxyde de césium (CsOH), et leurs mélanges.

La solution de dissolution peut être une solution notamment aqueuse, oxydante ou réductrice et ce, en fonction des composés à dissoudre. Ainsi, elle peut contenir au moins un agent oxydant ou au moins un agent réducteur. A noter que les acides minéraux et les bases minérales contenues dans la solution de dissolution peuvent faire fonction d'agents oxydants ou d'agents réducteurs. En variante, il peut être nécessaire d'ajouter d'autres agents oxydants ou réducteurs à la solution de dissolution mise en œuvre.

L'homme du métier connaît différentes façons de préparer de telles solutions de dissolution soit en diluant ou en mélangeant des compositions commerciales existantes, soit en les préparant de façon extemporanée. L'homme du métier connaît également différentes façons pour ajuster le pH jusqu'à la valeur souhaitée, si nécessaire, notamment en utilisant des additifs permettant de tamponner la ou les solution(s).

Dans le cadre du procédé selon la présente invention, l'addition du ou des agent(s) tensioactif(s) non ionique(s) dans la solution de dissolution est réalisée avant la mise en contact de cette solution avec le mélange à dissoudre.

Lorsque plusieurs agents tensioactifs non ioniques sont mis en œuvre, ces derniers peuvent être ajoutés à la solution de dissolution, les uns après les autres, par groupe ou encore en une fois. Suite à l'addition du ou des agent(s) tensioactif(s) non ionique(s) dans la solution de dissolution, cette dernière peut être soumise à une agitation de façon à homogénéiser la solution résultante. L'agitation peut être réalisée de manière classique, par exemple, à l'aide d'un agitateur, d'un agitateur magnétique, d'un barreau magnétique, d'un bain à ultrasons ou d'un homogénéisateur.

Le mélange solide soumis à une dissolution durant le procédé selon la présente invention peut être tout mélange comprenant au moins un premier composé dont la dissolution dans la solution de dissolution telle que précédemment définie génère au moins un composé gazeux et au moins un second composé qui ne produit aucun composé gazeux lors de sa dissolution dans ladite solution de dissolution.

Dans le cadre de l'invention, la dissolution du mélange solide suite au procédé selon l'invention peut être totale : l'ensemble des constituants du mélange se retrouvent en solution suite à la mise en œuvre de ce procédé. En variante, la dissolution peut être partielle : en fin de procédé, certains des constituants de ce mélange ne sont pas ou sont partiellement dissous et restent sous forme solide, alors que d'autres constituants sont complètement dissous.

Ce mélange peut présenter d'autres composés en plus des premier et second composés tels que définis dans la présente. Parmi ces autres composés, peuvent se trouver un ou plusieurs composé(s) ne se dissolvant pas dans la solution de dissolution mise en œuvre, un ou plusieurs composé(s) se dissolvant dans cette solution de dissolution sans générer de gaz et/ou un ou plusieurs composé(s) dont la dissolution dans cette solution de dissolution produit au moins un gaz. Ainsi, si le mélange mis en œuvre comprend plusieurs composés dont la dissolution dans la solution de dissolution produit des composés gazeux, la présence d'un ou plusieurs agent(s) tensioactif(s) non ionique(s) conformément au procédé selon l'invention favorisera sélectivement la dissolution de l'ensemble de tels composés.

Le mélange à dissoudre peut se présenter sous forme compacte telle qu'un dépôt ou une couche dans lequel/laquelle on trouve le premier et le second composés et éventuellement un ou plusieurs autre(s) composé(s). En variante, le mélange à dissoudre peut se présenter sous forme particulaire avec des particules essentiellement constituées du premier composé avec éventuellement au moins un autre composé et des particules essentiellement constituées du second composé avec éventuellement au moins un autre composé et/ou des particules comprenant le premier composé et le second composé avec éventuellement au moins un autre composé. Il faut entendre par particules non seulement des éléments de petite taille i.e. taille de l'ordre ou inférieure au millimètre mais aussi des éléments de plus grande taille comme des morceaux de plusieurs centimètres. Le mélange à dissoudre se présentant sous forme particulaire peut être le résultat d'une étape préalable de broyage d'un matériau compact.

Avantageusement, le mélange soumis à une dissolution dans le cadre de la présente invention est un rebut de fabrication ou produit solide provenant de la fabrication des éléments combustibles nucléaires, un produit solide provenant du traitement des combustibles nucléaires irradiés, une terre contaminée, un déchet solide d'équipements électriques ou électroniques, un déchet industriel, des composés solides issus du traitement des piles et batteries usagées, du traitement des aimants ou du traitement minier ou encore un minerai.

Dans ces cas, le premier et le second composés tels que précédemment définis et présents dans le mélange à dissoudre sont des éléments métalliques. A titre d'exemples de tels éléments métalliques, on peut citer un élément choisi parmi le mercure, l'or, le platine, le plomb, l'indium, le gallium, l'aluminium, le bismuth, l'étain, le cadmium, le cuivre, l'arsenic, le nickel, le zinc, le titane, le cobalt, le manganèse, le palladium, le radium, le ruthénium, le thorium, l'uranium, le plutonium, l'actinium, l'ytterbium, l'erbium, le terbium, le gadolinium, l'europium, le néodyme, le praséodyme, le cérium, le césium, le strontium et le lanthane. Dans le mélange à dissoudre selon le procédé de l'invention, cet élément métallique peut être sous une forme métallique (degré d'oxydation de zéro), sous une forme oxydée ou encore sous forme d'un alliage. En fonction de la solution de dissolution mise en œuvre, un quelconque élément métallique choisi dans la liste ci-dessus pourra se comporter soit comme un premier composé tel que précédemment défini, soit comme un second composé tel que précédemment défini.

A titre d'exemples plus particuliers de mélange et de premier composé tels que précédemment définis auxquels s'applique le procédé selon la présente invention, on peut citer :

- de l'oxyde d'uranium (premier composé d'intérêt) dans un produit solide provenant de la fabrication des éléments combustibles nucléaires ou un produit solide provenant du traitement des combustibles nucléaires irradiés (mélange) avec, comme second(s) composé(s), par exemple de l'oxyde de plutonium, des oxydes mixtes d'uranium et de plutonium ou encore des produits de fission non forcément sous forme oxyde. La solution de dissolution avantageusement mise en œuvre est une solution aqueuse contenant de 3 M à 8 M et en particulier d'environ 5 M d'acide nitrique ;
- du cuivre sous forme métallique (premier composé) dans un déchet industriel contenant un mélange d'acier et de cuivre (mélange) avec, comme second composé, du fer, un alliage de fer-nickel-chrome ou un acier, la solution de dissolution avantageusement mise en œuvre étant une solution aqueuse contenant de 3 M à 8 M et en particulier environ 5 M d'acide nitrique ;
- le mélange à dissoudre comprend des composés solides issus du recyclage des batteries ou piles usagées contenant des premiers composés tels que des métaux, oxydes métalliques ou composés intermétalliques constitués de nickel, terres rares (lanthane, cérium, néodyme, praséodyme) et cobalt, manganèse et aluminium, qui peuvent se dissoudre en produisant des gaz de dissolution. Les seconds composés contiennent l'électrolyte et les matières de structure dont les électrodes, les séparateurs et les grilles, souvent composés de métaux et alliages non solubles. La solution de dissolution avantageusement mise en œuvre est une solution aqueuse contenant de 1 M à 5 M et en particulier d'environ 3 M d'acide sulfurique ou nitrique ;
- le mélange à dissoudre comprend des composés solides issus du traitement des aimants permanents à base de terres rares souvent composés d'alliages métalliques comprenant des métaux, oxydables dans certaines conditions, en milieu aqueux acide. Les premiers composés sont des métaux ou alliages métalliques de terres rares, solubles par oxydation. Les seconds composés sont les éléments de structure et des composés entrant dans la composition globale des aimants dont la matrice métallique jouant un rôle de liant entre les grains d'alliages métalliques. La solution de dissolution avantageusement mise en œuvre est une solution aqueuse contenant de 1 M à 8 M et en particulier d'environ 3 M d'acide nitrique ou sulfurique, ou leur mélange, avec un agent oxydant ; et
- le mélange à dissoudre comprend des minerais et résidus miniers constitués de mélanges de composés d'oxydes métalliques. Les premiers composés contiennent des éléments métalliques oxydables en milieu aqueux oxydant, les seconds composés des éléments métalliques non-oxydables. La solution de dissolution avantageusement mise en œuvre est une solution aqueuse contenant de 1 M à 8 M et en particulier d'environ 3 M d'acide nitrique ou sulfurique, ou leur mélange, avec un agent oxydant.

Dans le cadre du procédé selon l'invention, la mise en contact entre le mélange à dissoudre, la solution de dissolution et le ou les agent(s) tensioactif(s) non ionique(s) peut être réalisée de différentes façons en mode continu ou discontinu (« batch »). Par exemple, on peut faire circuler en continu une solution de dissolution contenant le ou les agent(s) tensioactif(s) non ionique(s) sur les dépôts et/ou couches à dissoudre, en rinçant les parois des appareils et tuyauteries avec cette solution. Dans le cas des dépôts situés au fond de structures tels que des appareils, on peut remplir ces structures avec la solution de dissolution contenant le ou les agent(s) tensioactif(s) non ionique(s) et la laisser agir le temps nécessaire à la dissolution des solides. On peut également introduire le mélange à dissoudre dans un récipient, de type cuve, préalablement rempli de solution de dissolution contenant le ou les agent(s) tensioactif(s) non ionique(s).

Lors de la mise en contact, la solution de dissolution contenant le ou les agent(s) tensioactif(s) non ionique(s) peut être soumise à une agitation en utilisant un moyen classique connu de l'homme du métier.

Il convient de noter que l'homme du métier connaît la température à laquelle la mise en contact entre la solution de dissolution contenant le ou les agent(s) tensioactif(s) non ionique(s) et le mélange à dissoudre doit s'effectuer et ce, en fonction des composés à dissoudre et de la solution de dissolution utilisée.

D'autres caractéristiques et avantages de la présente invention apparaîtront encore à l'homme du métier à la lecture des exemples ci-dessous donnés à titre illustratif et non limitatif, en référence aux figures annexées.

## BRÈVE DESCRIPTION DES DESSINS

La Figure 1 présente les effets de l'ajout de différents tensioactifs sur les cinétiques de dissolution de billes de cuivre dans $HNO_3$ à 5 M et ce, sans agitation.

La Figure 2 présente les effets de l'ajout de différents tensioactifs sur les cinétiques de dissolution de billes de cuivre dans $HNO_3$ à 5 M et ce, avec agitation.

La Figure 3 présente les états de surface des billes de cuivre après dissolution dans $HNO_3$ à 5 M, sans tensioactif (Figure 3A) ou en présence d'un tensioactif (Glucopon) (Figure 3B).

La Figure 4 présente un contre-exemple où l'ajout d'un tensioactif (L64), sur la cinétique de dissolution de billes de cuivre dans une solution d'acide chlorhydrique (pH=0,3) et de $FeCl_3$ à 0,1 M i.e. sans production de bulles est sans effet.

La Figure 5 présente la vitesse de dissolution d'une poudre d'$UO_2$ avec ou sans tensioactif (L64), la vitesse de dissolution déterminant le temps de fin de dissolution.

## EXPOSÉ DÉTAILLÉ DE MODES DE RÉALISATION PARTICULIERS

### I. Dissolution du cuivre métallique dans l'acide nitrique.

Toutes les expériences ont été réalisées en bêcher, sans agitation ou avec une agitation vigoureuse de telle sorte que la dissolution ne soit pas contrôlée par la diffusion de la matière dissoute ou l'apport d'acide depuis la solution vers le solide, et à température ambiante.

Dans les essais ci-dessous, 0,5 g de Cu métallique a été mis à dissoudre dans 40 mL d'acide nitrique 5 M, en présence ou non de quantités variables de tensioactifs. Typiquement, les quantités de tensioactifs sont de 0,01 à 1 g dans 40 mL.

Le Tableau 1 ci-après présente les différents tensioactifs mis en œuvre et montrant un effet accélérateur de la dissolution. Parmi ceux-ci, on trouve :

- le Glucopon 215 CS UP qui est un tensioactif de la famille des « alkylpolyglucosides » connu pour être non-ionique en milieu très acide, et agissant fortement sur la tension de surface gaz-liquide dans un tel milieu ;
- les agents P123, F127, L64, L35, L31 et F108 qui font partie de la famille des poloxamères ou copolymères non-ioniques à trois blocs, qui sont des bloc-polymères de polypropylène glycol et de polyéthylène glycol, voir formule ci-dessous :

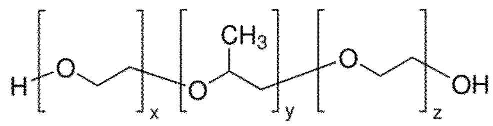

- le 31R1 qui est un poloxamère dit « inverse » car les groupements de polypropylène et polyéthylène sont intervertis ;
- le P8020 - Simulsol 98 qui est un exemple d'acide gras i.e. un éther d'un alcool oléique et de polyéthylène glycol selon la formule ci-dessous :

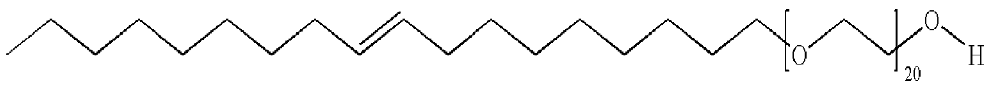

Tableau 1 : Récapitulatif des agents tensioactifs non ioniques utilisés avec leur indice HLB (Hydrophilic-Lipophilic Balance)

| Nom | N° CAS | MW | HLB |
|---|---|---|---|
| Pluronic P123 | 9003116 | 5800 | 7 à 9 |
| Pluronic L35 | 9003116 | 1900 | 18 à 23 |
| Pluronic L31 | 9003116 | 1100 | 1 à 7 |
| Pluronic L64 | 9003116 | 2900 | 12 à 18 |
| Pluronic 31R1 | 9003116 | 3300 | 2 à 7 |
| Pluronic F108 | 9003116 | 14600 | >24 |
| Pluronic F127 | 9003116 | 12600 | 18-23 |
| Glucopon 215 CS UP | 68515731 | | 13 |
| P8020 - SIMULSOL 98 | | | 15,6 |

Ce tableau montre que presque toute la gamme des indices HLB a été prospectée. Ainsi, selon l'indice HLB, on y retrouve des agents moussants, mouillants, émulsifiants, détergents et de solubilisation.

Pour l'homme du métier, il est connu que pour l'$UO_2$, le cuivre métallique et d'autres métaux et oxydes, la dissolution s'effectue selon des mécanismes chimiques catalytiques ou autocatalytiques. Dans ce dernier cas, c'est le catalyseur qui est produit par la réaction de dissolution. Ainsi, l'importance de la présence, ou pas, de catalyseur à la surface immédiate des solides à dissoudre est connue par l'homme du métier. Celui-ci agit alors sur les paramètres comme l'agitation ou la charge solide de la solution pour optimiser la dissolution. Ceci est également particulièrement vrai lorsque celle-ci est amenée à produire des gaz de dissolution. De nouveau, la capacité de nucléation des gaz, dans la fraction de la solution au contact immédiat des solides, est très sensible à l'agitation du milieu. Ainsi, les résultats obtenus sur la dissolution sont présentés sur les Figures 1 et 2 en fonction de l'agitation appliquée à la solution. La Figure 1 montre les résultats sans agitation, et la Figure 2 avec une forte agitation.

Dans les deux cas, même si les meilleurs résultats ne sont pas forcément obtenus avec les mêmes tensioactifs, on observe très clairement l'augmentation des cinétiques en présence d'agents tensioactifs dès la mise en solution comparé aux cinétiques obtenues en l'absence d'un quelconque agent tensioactif (courbes « Référence »).

En particulier, dans le cas avec agitation vigoureuse, la dissolution contrôle i.e. sans agent tensioactif montre une courbe classique comprenant une période dite « d'induction » d'environ 25 min. D'après les travaux des inventeurs, cette période correspond à celle d'une activation progressive des sites de nucléation de bulles de gaz - et donc de sites de dissolution - par l'accumulation progressive de gaz dissous. Cette période est complètement effacée par l'ajout d'agent tensioactif : la nucléation de bulles de gaz est nettement favorisée probablement par un abaissement important des tensions de surface.

L'observation par microscopie a permis de comparer l'état de surface des particules au cours de la dissolution (Figure 3). La dissolution en présence de tensioactifs, comme dans le cas du Glucopon 215, donne lieu à une croissance plus prononcée des failles. Ceci s'explique par la promotion de la dissolution produisant des gaz depuis des failles, notamment par l'augmentation du nombre de sites actifs de dissolution.

En contre-exemple, la Figure 4 montre les cinétiques de dissolution des mêmes solides dans une solution où aucun gaz de dissolution n'est produit. Cette solution est composée d'acide chlorhydrique (pH=0,3) et de $FeCl_3$ à 0,1 M. Le cuivre est alors dissous par son oxydation par le $Fe^{III}$ en solution, produisant du Fe" mais sans la production de bulles de gaz. Dans ce cas, l'ajout de tensioactifs ne modifie pas la cinétique de dissolution.

## II. Dissolution du dioxyde d'uranium dans l'acide nitrique.

Dans deux béchers contenant 20 mL d'acide nitrique à 5 M, on ajoute dans le premier 0,01 g du tensioactif Pluronic L64, et dans l'autre rien.

Un gramme de poudre de dioxyde d'uranium ($UO_2$) est introduit dans chacun des béchers (soit une concentration d'uranium finale visée de 45 g/L). Dans les deux cas, cette poudre se disperse immédiatement pour former une solution opaque. Une légère agitation est appliquée pendant quelques secondes pour disperser la poudre dans les deux béchers.

Dans le cas du bécher avec le tensioactif L64, le bullage démarre immédiatement, alors que dans le bécher sans tensioactif (bêcher de référence), le bullage met au moins 3 min pour démarrer. Dans le bécher avec tensioactif, la fin de la réaction de dissolution est constatée (toute la poudre a été dissoute) au bout de 7 min : en l'absence de particules, la solution retient la seule couleur jaune du nitrate d'uranyle ; dans le bécher de référence, sans tensioactif, la dissolution totale n'est effective qu'au bout de 14 min. Le temps de dissolution totale représenté sur la Figure 5 est un bon indicateur de la vitesse de dissolution. Elle est dans ce cas deux fois supérieure pour la solution avec L64.

Les résultats de cette expérience ont été reproductibles à deux reprises, avec des masses initiales d'$UO_2$ variables (comprises entre 1 g/L et 45 g/L).

## RÉFÉRENCES

**[1]** VALANT, « Hétéronucléation des bulles dans des liquides sursaturés en CO2 », Résumé de la Thèse de l'Université de Marne-la-Vallée, 7 octobre 2005.

**[2]** LUBETKIN, « Why Is It Much EasierTo Nucleate Gas Bubbles than Theory Predicts? », Langmuir, vol. 19, n°7, 2003, p. 2575-2587.

**[3]** WEI et al, « Water electrolysis on carbon electrodes enhanced by surfactant », Electrochimica Acta, vol. 52, n°9, 2007, p. 3323-3329.

**[4]** TAHA, « Effect of surfactants on the rate of solid-liquid mass transfer with gas generation at the interface », Journal of colloid and interface science, vol. 275, n°1, 2004, p. 235-242.

**[5]** Demande internationale WO 2008/130592, « Process for producing hydrogen gas from sustainable biofuels or from other carbon based fuels », publiée le 30 octobre 2008.

**[6]** Demande de brevet GB 2 264 112, « Hydrogen generating composition and method of production therof », publiée le 22 mars 1995.

## Revendications

1. Procédé de dissolution sélective d'un premier composé solide présent dans un mélange vis-à-vis d'au moins un second composé solide différent dudit premier composé solide également présent dans ledit mélange,

   ledit procédé comprenant au moins une étape consistant à mettre en contact ledit mélange avec une solution de dissolution dans laquelle ledit premier composé solide est dissous en générant au moins un composé gazeux et dans laquelle ledit second composé solide est dissous sans générer aucun composé gazeux,
   **caractérisé en ce que** ladite solution de dissolution comprend au moins un agent tensioactif non ionique et **en ce que** ledit au moins agent tensioactif non ionique est ajouté à ladite solution de dissolution avant la mise en contact de ladite solution avec ledit mélange à dissoudre.

2. Procédé selon la revendication 1, **caractérisé en ce que** ledit ou lesdits agent(s) tensioactif(s) non-ionique(s) utilisable(s) est/sont choisi(s) dans la famille des alkylpolyglucosides ou des alkylpolyétherglucosides, dans la famille des éthers polyéthoxylés ou dans la famille des copolymères blocs d'oxydes de polyéthylène et de polypropylène.

3. Procédé selon la revendication 1 ou 2, **caractérisé en ce que** ledit ou lesdits agent(s) tensioactif(s) non-ionique(s) sont utilisé(s) en une quantité totale comprise entre 0,1 et 50 g par litre de solution de dissolution, notamment comprise entre 0,2 et 40 g par litre de solution de dissolution et, en particulier, entre 0,25 et 30 g par litre de solution de dissolution.

4. Procédé selon l'une quelconque des revendications 1 à 3, **caractérisé en ce que** ladite solution de dissolution est une solution aqueuse acide voire fortement acide ou une solution aqueuse alcaline voire fortement alcaline.

5. Procédé selon l'une quelconque des revendications 1 à 4, **caractérisé en ce que** ladite solution de dissolution est choisie parmi les solutions aqueuses d'acide chlorhydrique (HCl), d'acide nitrique ($HNO_3$), d'acide fluorhydrique (HF), d'acide sulfurique ($H_2SO_4$), d'acide phosphorique ($H_3PO_4$), et leurs mélanges.

6. Procédé selon l'une quelconque des revendications 1 à 5, **caractérisé en ce que** ladite solution de dissolution est choisie parmi les solutions aqueuses d'hydroxyde de sodium (NaOH), d'hydroxyde de potassium (KOH), d'hydroxyde de calcium ($Ca(OH)_2$), d'hydroxyde de lithium (LiOH), d'hydroxyde de césium (CsOH), et leurs mélanges.

7. Procédé selon l'une quelconque des revendications 1 à 6, **caractérisé en ce que** ledit mélange à dissoudre se présente sous forme compacte ou sous forme particulaire.

8. Procédé selon l'une quelconque des revendications 1 à 7, **caractérisé en ce que** ledit mélange à dissoudre est un rebut de fabrication ou produit solide provenant de la fabrication des éléments combustibles nucléaires, un produit solide provenant du traitement des combustibles nucléaires irradiés, une terre contaminée, un déchet solide d'équipements électriques ou électroniques, un déchet industriel, des composés solides issu du traitement des piles et batteries usagées, du traitement des aimants ou du traitement minier ou encore un minerai.

9. Procédé selon l'une quelconque des revendications 1 à 8, **caractérisé en ce que** ledit premier composé est de l'oxyde d'uranium dans un produit solide provenant de la fabrication des éléments combustibles nucléaires ou un produit solide provenant du traitement des combustibles nucléaires irradiés avec, comme second(s) composé(s), de l'oxyde de plutonium, des oxydes mixtes d'uranium et de plutonium ou encore des produits de fission non forcément sous forme oxyde, la solution de dissolution étant une solution aqueuse contenant de 3 M à 8 M d'acide nitrique.

**10.** Procédé selon l'une quelconque des revendications 1 à 8, **caractérisé en ce que** ledit premier composé est du cuivre sous forme métallique dans un déchet industriel contenant un mélange d'acier et de cuivre avec, comme second composé, du fer, un alliage de fer-nickel-chrome ou un acier, la solution de dissolution étant une solution aqueuse contenant de 3 M à 8 M d'acide nitrique.

**11.** Procédé selon l'une quelconque des revendications 1 à 8, **caractérisé en ce que** le mélange à dissoudre comprend des composés solides issus du recyclage des batteries ou piles usagées, les premiers composés étant des métaux, oxydes métalliques ou composés intermétalliques constitués de nickel, terres rares, cobalt, manganèse et aluminium, les seconds composés contenant l'électrolyte et les matières de structure dont les électrodes, les séparateurs et les grilles et la solution de dissolution étant une solution aqueuse contenant de 1 M à 5 M d'acide sulfurique ou nitrique ;

**12.** Procédé selon l'une quelconque des revendications 1 à 8, **caractérisé en ce que** le mélange à dissoudre comprend des composés solides issus du traitement des aimants permanents, les premiers composés étant des métaux ou alliages métalliques de terres rares, solubles par oxydation, les seconds composés étant les éléments de structure et des composés entrant dans la composition globale des aimants dont la matrice métallique jouant un rôle de liant entre les grains d'alliages métalliques et la solution de dissolution étant une solution aqueuse contenant de 1 M à 8 M d'acide nitrique ou sulfurique, ou leur mélange, avec un agent oxydant.

**13.** Procédé selon l'une quelconque des revendications 1 à 8, **caractérisé en ce que** le mélange à dissoudre comprend des minerais et résidus miniers constitués de mélanges de composés d'oxydes métalliques, les premiers composés contenant des éléments métalliques oxydables en milieu aqueux oxydant, les seconds composés des éléments métalliques non-oxydables et la solution de dissolution étant une solution aqueuse contenant de 1 M à 8 M d'acide nitrique ou sulfurique, ou leur mélange, avec un agent oxydant.

**14.** Procédé selon l'une quelconque des revendications 1 à 13, **caractérisé en ce que** lors de ladite mise en contact, ladite solution de dissolution contenant ledit ou lesdits agent(s) tensioactif(s) non ionique(s) est soumise à une agitation.

**Patentansprüche**

**1.** Verfahren zum selektiven Auflösen einer in einem Gemisch vorhandenen ersten Feststoffverbindung von zumindest einer zweiten Feststoffverbindung, die sich von ersten Feststoffverbindung unterscheidet und ebenfalls in dem Gemisch vorhanden ist,

wobei das Verfahren mindestens einen Schritt umfasst, bei dem das Gemisch mit einer auflösenden Lösung in Kontakt gebracht wird, in der die erste Feststoffverbindung unter Erzeugung mindestens einer gasförmigen Verbindung aufgelöst wird und in der die zweite Feststoffverbindung ohne Erzeugung einer gasförmigen Verbindung aufgelöst wird,
**dadurch gekennzeichnet, dass** die auflösende Lösung mindestens ein nichtionisches Tensid enthält und dass das zumindest eine nichtionische Tensid der auflösenden Lösung zugegeben wird, bevor die Lösung mit dem aufzulösenden Gemisch in Kontakt gebracht wird.

**2.** Verfahren nach Anspruch 1, **dadurch gekennzeichnet, dass** das/die verwendbare(n) nichtionische(n) Tensid(e) aus der Familie der Alkylpolyglucoside oder Alkylpolyetherglucoside, aus der Familie der polyethoxylierten Ether oder aus der Familie der Polyethylenoxid-Polypropylen-Blockcopolymere ausgewählt ist/sind.

**3.** Verfahren nach Anspruch 1 oder 2, **dadurch gekennzeichnet, dass** das/die nichtionische(n) Tensid(e) in einer Gesamtmenge zwischen 0,1 und 50 g pro Liter auflösende Lösung, insbesondere zwischen 0,2 und 40 g pro Liter auflösende Lösung und insbesondere zwischen 0,25 und 30 g pro Liter auflösende Lösung verwendet wird/werden.

**4.** Verfahren nach einem der Ansprüche 1 bis 3, **dadurch gekennzeichnet, dass** die auflösende Lösung eine saure bzw. stark saure wässrige Lösung oder eine alkalische bzw. stark alkalische wässrige Lösung ist.

**5.** Verfahren nach einem der Ansprüche 1 bis 4, **dadurch gekennzeichnet, dass** die auflösende Lösung ausgewählt ist aus wässrigen Lösungen von Salzsäure (HCl), Salpetersäure ($HNO_3$), Flusssäure (HF), Schwefelsäure ($H_2SO_4$), Phosphorsäure ($H_3PO_4$) und deren Gemischen.

6. Verfahren nach einem der Ansprüche 1 bis 5, **dadurch gekennzeichnet, dass** die auflösende Lösung ausgewählt ist aus wässrigen Lösungen von Natriumhydroxid (NaOH), Kaliumhydroxid (KOH), Calciumhydroxid ($Ca(OH)_2$), Lithiumhydroxid (LiOH), Cäsiumhydroxid (CsOH) und deren Gemischen.

7. Verfahren nach einem der Ansprüche 1 bis 6, **dadurch gekennzeichnet, dass** das aufzulösende Gemisch in kompakter oder partikulärer Form vorliegt.

8. Verfahren nach einem der Ansprüche 1 bis 7, **dadurch gekennzeichnet, dass** das aufzulösende Gemisch ein Produktionsabfall oder ein Feststoffprodukt aus der Herstellung von Kernbrennelementen, ein Feststoffprodukt aus der Aufbereitung von bestrahlten Kernbrennstoffen, kontaminierter Boden, ein Feststoffabfall aus elektrischen oder elektronischen Geräten, ein Industrieabfall, Feststoffverbindungen aus der Aufbereitung von Altbatterien, aus der Aufbereitung von Magneten oder aus dem Bergbau oder ein Erz ist.

9. Verfahren nach einem der Ansprüche 1 bis 8, **dadurch gekennzeichnet, dass** die erste Verbindung Uranoxid in einem Feststoffprodukt aus der Herstellung von Kernbrennelementen oder einem Feststoffprodukt aus der Aufbereitung von bestrahlten Kernbrennstoffen ist, mit als zweite Verbindung(en) Plutoniumoxid, Mischoxide aus Uran und Plutonium oder Spaltprodukte, die nicht unbedingt in Oxidform vorliegen, wobei die auflösende Lösung eine wässrige Lösung ist, die 3 M bis 8 M Salpetersäure enthält.

10. Verfahren nach einem der Ansprüche 1 bis 8, **dadurch gekennzeichnet, dass** die erste Verbindung Kupfer in metallischer Form in einem Industrieabfall ist, der ein Gemisch aus Stahl und Kupfer und als zweite Verbindung Eisen, eine Eisen-Nickel-Chrom-Legierung oder Stahl enthält, wobei die auflösende Lösung eine wässrige Lösung ist, die 3 M bis 8 M Salpetersäure enthält.

11. Verfahren nach einem der Ansprüche 1 bis 8, **dadurch gekennzeichnet, dass** das aufzulösende Gemisch Feststoffverbindungen aus dem Recycling von Altbatterien enthält, wobei die ersten Verbindungen Metalle, Metalloxide oder intermetallische Verbindungen aus Nickel, Seltenen Erden, Kobalt, Mangan und Aluminium sind, die zweiten Verbindungen den Elektrolyten und Strukturmaterialien einschließlich Elektroden, Separatoren und Gitter enthalten, und die auflösende Lösung eine wässrige Lösung mit 1 M bis 5 M Schwefel- oder Salpetersäure ist.

12. Verfahren nach einem der Ansprüche 1 bis 8, **dadurch gekennzeichnet, dass** das aufzulösende Gemisch Feststoffverbindungen enthält, die aus der Aufbereitung von Dauermagneten stammen, wobei die ersten Verbindungen oxidationslösliche Seltenerdmetalle oder -Metalllegierungen sind, die zweiten Verbindungen die Strukturelemente und Verbindungen sind, die in die Gesamtzusammensetzung der Magnete eingehen, deren Metallmatrix als Bindemittel zwischen den Körnern der Metalllegierungen wirkt, und die auflösende Lösung eine wässrige Lösung ist, die 1 M bis 8 M Salpeter- oder Schwefelsäure oder deren Gemisch mit einem Oxidationsmittel enthält.

13. Verfahren nach einem der Ansprüche 1 bis 8, **dadurch gekennzeichnet, dass** das aufzulösende Gemisch Erze und Bergbaurückstände umfasst, die aus Gemischen von Metalloxidverbindungen bestehen, wobei die ersten Verbindungen in einem wässrigen oxidierenden Medium oxidierbare Metallelemente enthalten, die zweiten Verbindungen nicht oxidierbare Metallelemente enthalten und die auflösende Lösung eine wässrige Lösung ist, die 1 M bis 8 M Salpeter- oder Schwefelsäure oder deren Gemisch mit einem Oxidationsmittel enthält.

14. Verfahren nach einem der Ansprüche 1 bis 13, **dadurch gekennzeichnet, dass** beim Inkontaktbringen die das bzw. die nichtionischen Tenside enthaltende auflösende Lösung gerührt wird.

**Claims**

1. Method for selective dissolution of a first solid compound present in a mixture with respect to at least a second solid compound different from the first solid compound, and also present in the mixture,

   wherein the method comprises at least one step of contacting the mixture with a dissolution solution, in which the first solid compound is dissolved by generating at least one gaseous compound and the second solid compound is dissolved without generating any gaseous compound,
   **characterized in that** the dissolution solution comprises at least one non-ionic surfactant and **in that** said at least one non-ionic surfactant is added to said dissolution solution before bringing said solution into contact with said mixture to be dissolved.

2. Method according to claim 1, **characterized in that** said usable non-ionic surfactant(s) is/are chosen in the family of alkylpolyglucosides or alkylpolyetherglucosides, in the family of polyethoxylated ethers or in the family of block copolymers of polyethylene and polypropylene oxides.

3. Method according to claim 1 or 2, **characterized in that** said non-ionic surfactant(s) are used in a total amount of between 0.1 and 50 g per liter of dissolution solution, especially between 0.2 and 40 g per liter of dissolution solution and, in particular, between 0.25 and 30 g per liter of dissolution solution.

4. Method according to any one of the claims 1 to 3, **characterized in that** said dissolution solution is an acidic or strongly acidic aqueous solution or an alkaline or even strongly alkaline aqueous solution.

5. Method according to any one of the claims 1 to 4, **characterized in that** said dissolution solution is selected from aqueous solutions of hydrochloric acid (HCl), nitric acid ($HNO_3$), hydrofluoric acid (HF), sulfuric acid ($H_2SO_4$), phosphoric acid ($H_3PO_4$), and mixtures thereof.

6. Method according to any one of the claims 1 to 5, **characterized in that** said dissolution solution is selected from aqueous solutions of sodium hydroxide (NaOH), potassium hydroxide (KOH), hydroxide of calcium ($Ca(OH)_2$), lithium hydroxide (LiOH), cesium hydroxide (CsOH), and mixtures thereof.

7. Method according to any one of the claims 1 to 6, **characterized in that** said mixture to be dissolved is in compact form or in particulate form.

8. Method according to any one of the claims 1 to 7, **characterized in that** said mixture to be dissolved is production waste or solid product from the production of nuclear fuel elements, a solid product from the treatment of irradiated nuclear fuel, contaminated soil, solid waste from electrical or electronic equipment, industrial waste, solid compounds from the treatment of used cells and batteries, the treatment of magnets or mining treatment or even an ore.

9. Method according to any one of the claims 1 to 8, **characterized in that** said first compound is uranium oxide in a solid product from the production of nuclear fuel elements or a solid product from the treatment of irradiated nuclear fuel with, as the second compound(s), plutonium oxide, mixed oxides of uranium and plutonium or fission products not necessarily in oxide form, wherein the dissolution solution is an aqueous solution containing from 3 M to 8 M of nitric acid.

10. Method according to any one of the claims 1 to 8, **characterized in that** said first compound is copper in metallic form in an industrial waste containing a mixture of steel and copper with, as the second compound, iron, an iron-nickel-chromium alloy or steel, wherein the dissolution solution is an aqueous solution containing from 3 M to 8 M of nitric acid.

11. Method according to any one of the claims 1 to 8, **characterized in that** the mixture to be dissolved comprises solid compounds from the recycling of used cells or batteries, wherein the first compounds are metals, metal oxides or intermetallic compounds consisting of nickel, rare earths, cobalt, manganese and aluminum, while the second compounds contain the electrolyte and the structural materials including electrodes, separators and grids and wherein the dissolution solution is an aqueous solution containing from 1 M to 5 M of sulfuric or nitric acid.

12. Method according to any one of the claims 1 to 8, **characterized in that** the mixture to be dissolved comprises solid compounds from the treatment of permanent magnets, wherein the first compounds are metals or metal alloys of rare earths, soluble by oxidation, while the second compounds are the structural elements and compounds used in the overall composition of the magnets including the metal matrix acting as a binder between the grains of metal alloys and wherein the dissolution solution is an aqueous solution containing from 1 M to 8 M of nitric or sulfuric acid, or a mixture thereof, with an oxidizing agent.

13. Method according to any one of the claims 1 to 8, **characterized in that** the mixture to be dissolved comprises ores and mine wastes consisting of mixtures of compounds of metal oxides, wherein the first compounds contain oxidizable metal elements in an aqueous oxidizing medium, while the second compounds contain the non-oxidizable metallic elements and wherein the dissolution solution is an aqueous solution containing from 1 M to 8 M of nitric or sulfuric acid, or their mixture, with an oxidizing agent.

14. Method according to any one of the claims 1 to 13, **characterized in that** during the contacting, the dissolution

solution containing the non-ionic surfactant(s) is subjected to stirring.

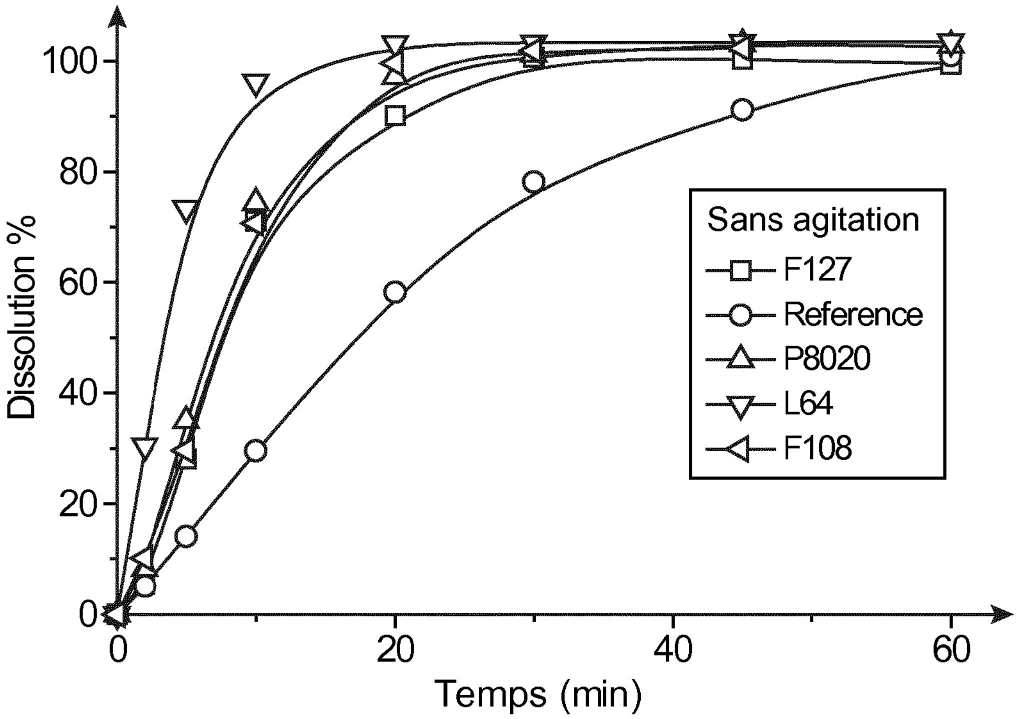
100
80
60
40
20
0
Dissolution %
0
20
40
60
Temps (min)
Sans agitation
F127
Reference
P8020
L64
F108

FIG.1

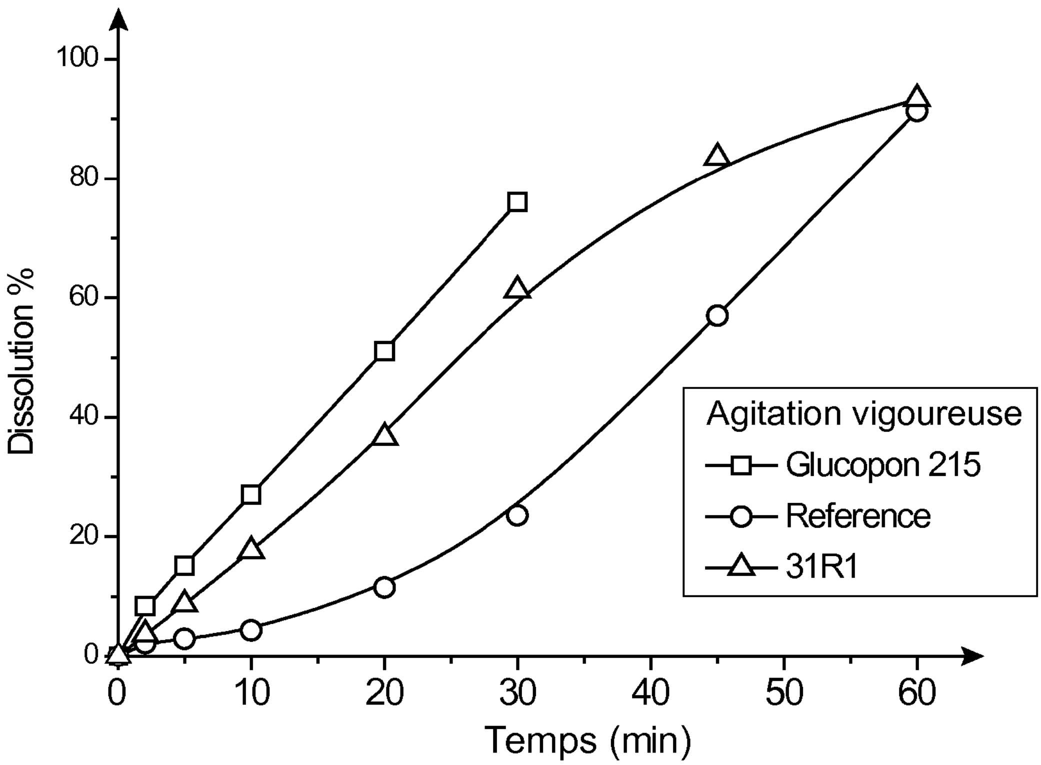
100
80
60
40
20
0
Dissolution %
0
10
20
30
40
50
60
Temps (min)
Agitation vigoureuse
Glucopon 215
Reference
31R1

FIG.2

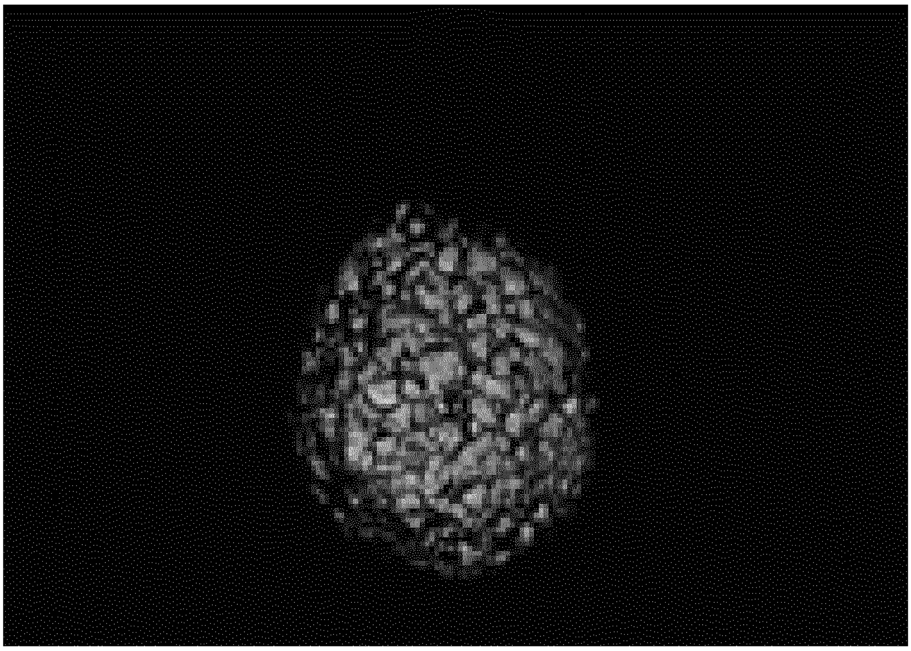

FIG.3A

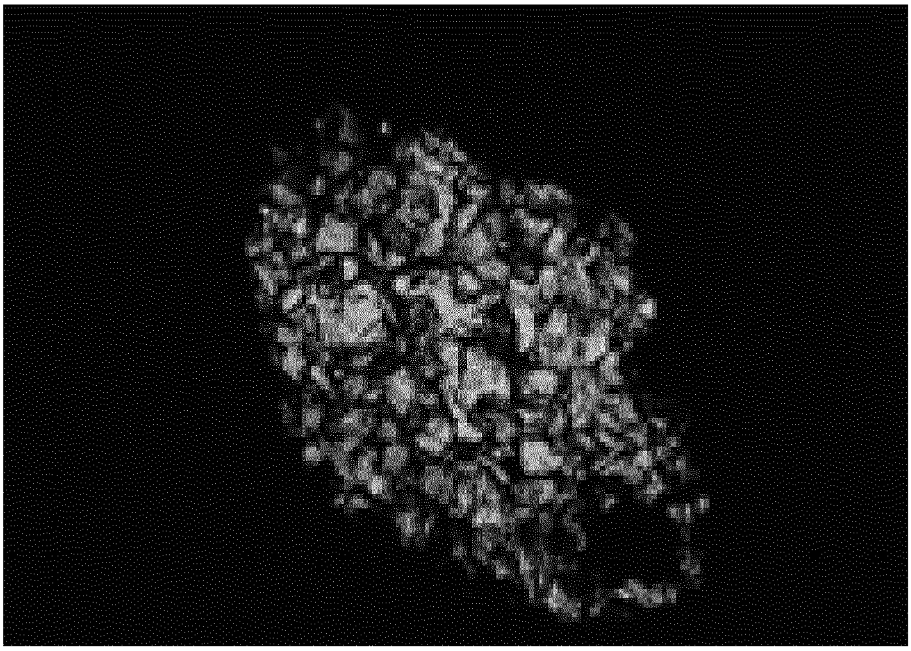

FIG.3B

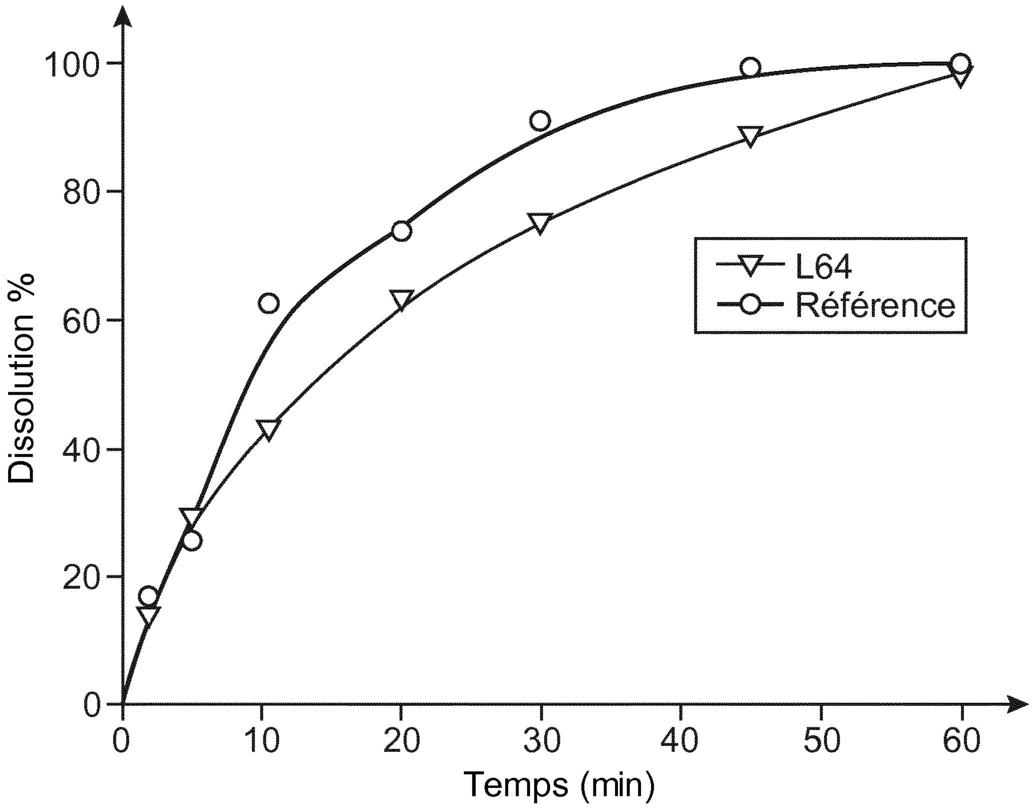
Dissolution %
100
80
60
40
20
0
0
10
20
30
40
50
60
Temps (min)
L64
Référence

FIG.4

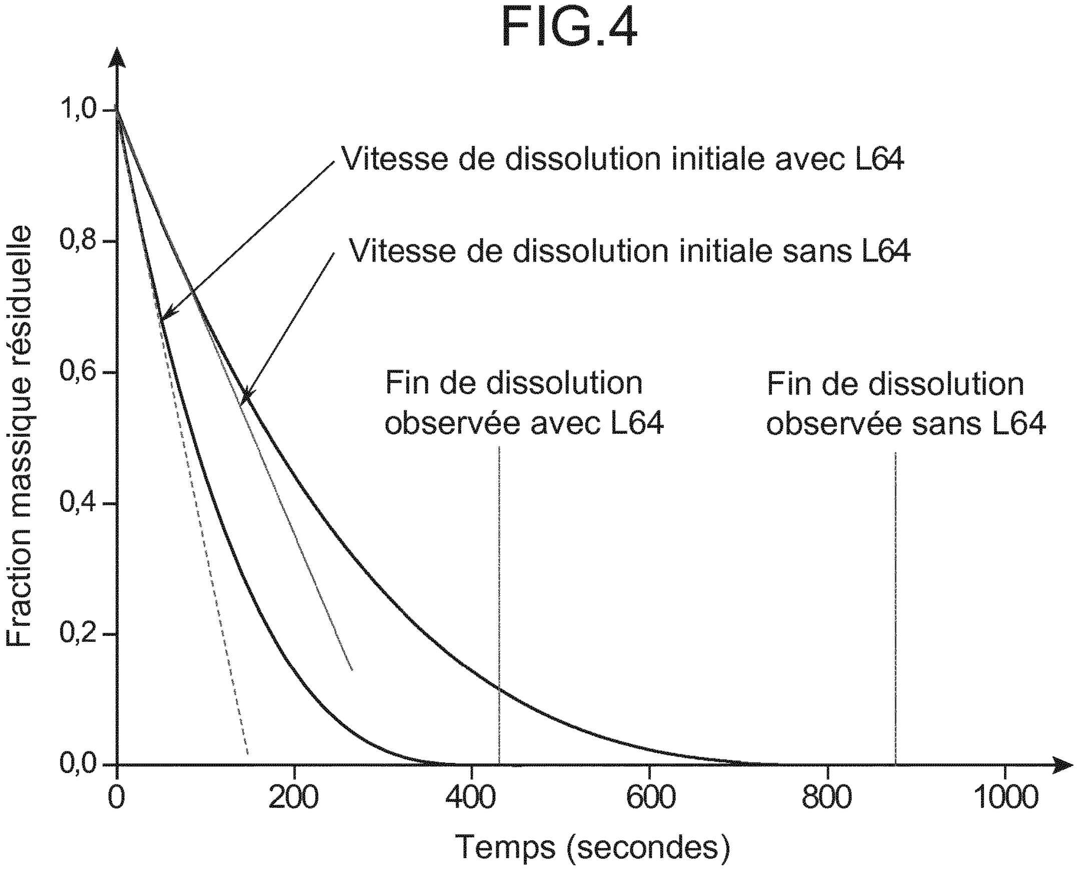
Fraction massique résiduelle
1,0
0,8
0,6
0,4
0,2
0,0
Vitesse de dissolution initiale avec L64
Vitesse de dissolution initiale sans L64
Fin de dissolution observée avec L64
Fin de dissolution observée sans L64
0
200
400
600
800
1000
Temps (secondes)

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2008130592 A
- GB 2264112 A
- EP 2653573 A


### Littérature non-brevet citée dans la description


- *CHEMICAL ABSTRACTS,* 9003116, 9003116, 9003116, 9003116, 9003116, 9003116, 9003116, 68515731
- **VALANT.** Héréronucléation des bulles dans des liquides sursaturés en CO. *Résumé de la Thèse de l'Université de Marne-la-Vallée,* 07 Octobre 2005
- **LUBETKIN.** Why Is It Much EasierTo Nucleate Gas Bubbles than Theory Predicts?. *Langmuir,* 2003, vol. 19 (7), 2575-2587
- **WEI et al.** Water electrolysis on carbon electrodes enhanced by surfactant. *Electrochimica Acta,* 2007, vol. 52 (9), 3323-3329
- **TAHA.** Effect of surfactants on the rate of solid-liquid mass transfer with gas generation at the interface. *Journal of colloid and interface science,* 2004, vol. 275 (1), 235-242